# EUROPEAN PATENT SPECIFICATION

(11) **EP 3 135 464 B1**
(45) Date of publication and mention of the grant of the patent: **03.10.2018**
(21) Application number: 15182670.8
(22) Date of filing: 27.08.2015
(51) Int. Cl.: B29C 64/118, B29D 12/02, B33Y 70/00, B33Y 40/00, B33Y 80/00

(54) **METHOD OF MAKING EYEWEAR BY 3D PRINTING**
VERFAHREN ZUR HERSTELLUNG VON BRILLEN DURCH 3D-DRUCK
PROCÉDÉ DE FABRICATION DE LUNETTES PAR IMPRESSION 3D

(43) Date of publication of application: 01.03.2017
(73) Proprietor: Okia Optical Company Limited, Kowloon, Hong Kong (CN)
(72) Inventor: LAM, Yin Sang, Kowloon,Hongkong (CN); ZHANG, Yan, Kowloon, Hongkong (CN)
(74) Representative: Becker Kurig Straus

(56) References cited:
- US-A- 3 102 323
- US-A1- 2014 088 751
- US-A1- 2015 217 517

## Description

### FIELD OF THE INVENTION

This invention relates to methods of making eyewear products by three-dimensional printing and eyewear products made by the methods disclosed herein.

### BACKGROUND OF THE INVENTION

Three-dimensional (3D) printing apparatus and processes are widely used for making 3D articles of any predetermined size and shape. In 3D printing, successive layers of material are laid down to make the 3D articles under computer control based on 3D models or other electronic data sources.

Many different 3D printing processes have been invented since the late 1970s. The main differences among currently available 3D printing processes are in the way layers are deposited and in the materials used in the processes. Some processes melt or soften material to produce the layers, e.g., selective laser melting (SLM) or direct metal laser sintering (DMLS), selective laser sintering (SLS), fused deposition modeling (FDM), or fused filament fabrication (FFF), while others cure liquid materials using different technologies, *e.g.,* stereolithography (SLA) or digital light processing (DLP). Each method has its own advantages and drawbacks.

Among all 3D printing processes, the FDM or FFF process is generally the most economical in term of use of printing materials and most advantageous in term of design of machinery. In FDM or FFF, a 3D article is produced by extruding one or more molten materials which harden upon cooling to form layers. In general, the printing materials, including thermoplastics and metals, are in the form of a filament or wire wound on a coil. The filament or wire can be unreeled and fed to 3D printer extruder (aka print head, printer head or extrusion head). The 3D printer extruder melts the filament or wire and turns the flow of the melt on and off. Generally, stepper motors or servo motors can be used to move the nozzle of the 3D printer extruder in horizontal directions (X and Y axes) and vertical direction (Z axis), as well as adjust the flow. A computer-aided manufacturing (CAM) software package running on a microcontroller can be used to control the mechanism and printing process.

Currently most FDM or FFF printers are single color printers. However, consumers are demanding high quality and affordable color printing. One of the challenges in FDM or FFF color printing is to produce 3D articles having a continuous range of colors.

U.S. Pat. No. 6,165,406 discloses a color printing method using separate nozzles for each individual ink. The method does not provide meaningful ink mixing, and therefore a continuous range of colors cannot be achieved. Furthermore, multi-nozzle printers are more complicated and expensive than single-nozzle printers.

U.S. Pat. No. 6,129,872 discloses a color printing method comprising melting a material in a nozzle; and metering various colorants selectively into the melt at the end of the nozzle. However, this method also does not provide adequate mixing of the colorants with the viscous melt and therefore, a clean and continuous range of colors cannot be obtained.

U.S. Patent Application No. 2014/0134334 A1 describes a color printing method comprising: coating a continuously transported filament with additive compositions and/or with dye compositions, fixing the additive composition and/or dye composition on the surface of the filament, passing the coated filament into a print head, melting of the filament in the print head, and discharging the melt by a nozzle as a print. However the coating increases the diameter of the filament which may affect passing the filament into a standard print head or nozzle.

U.S. Patent Application No. 2015/0142159 A1 discloses a 3D continuous color printer comprising one or more cartridges each with a building material stored therein, a mixer coupled to each cartridge, and a single print head coupled to a mixer output, wherein the building material stored in the cartridge is transported to the mixer and the single print head to form a continuous color object. However, this method may not work well with materials in solid form. From US 3,102,323 there is known a method of producing a textile. From US 2015/0217517 A1 there is known a method for additive manufacturing processes involving active deposition. From US 2014/0088751 there is known a fused deposition modeling process for production of three-dimensional objects.

Some color printing methods use various colored materials in granulate or filaments form, wherein the methods comprise melting the materials separately, mixing them according to color requirement with an intervening extruder, and applying the molten materials as print. These processes require very sophisticated and complicated apparatus, and therefore are very expensive. Furthermore, the achievable color range is subject to restriction resulting from the number of different colored materials.

In general, thermoplastic materials suitable for the FDM or FFF process include acrylonitrile butadiene styrene (ABS), polycarbonate (PC), polylactic acid (PLA), high density polyethylene (HDPE), polyphenylsulfone (PPSU), poly(meth)acrylate, polyetherimide (PEI), polyether ether ketone (PEEK), high impact polystyrene (HIPS), thermoplastic polyurethane (TPU), polyamides (nylon) and combinations thereof. These thermoplastic materials are generally in the form of a filament fabricated from virgin resins.

Cellulose esters are not commonly used materials for 3D printing. However, cellulose esters such as cellulose acetate are widely used for making eyewear products. Although selective laser sintering (SLS) has been used to make eyeglass frames with a superfine polyamide powder, it cannot be used to produce eyeglass frames having a plurality of colors comprise at least one smooth transition from one color to another color without a sudden switch or stepped change in color.

In view of the above, there is always a need for new 3D printing methods for making eyewear products made of a cellulose ester, a nylon or a polyester using simple and inexpensive single-nozzle 3D printers, wherein the eyewear products have a continuous range of colors. Also there is always a need for eyewear products made by 3D printing having a continuous range of colors which remain the same after surface finishing and/or will not wear off with constant use. Also there is always a need for eyewear products having a tailor-made multi-color pattern or design.

### SUMMARY OF THE INVENTION

Provided herein are methods of preparing eyewear products made of a cellulose ester, a nylon or a polyester by simple and inexpensive single-nozzle or multi-nozzle 3D printers. In some embodiments, the eyewear products have a continuous range of colors or a gradual color change. In certain embodiments, the eyewear products have a plurality of colors comprise at least one smooth transition from one color to another color without a sudden switch or stepped change in color. Also provided herein are eyewear products made of a cellulose ester, a nylon or a polyester prepared by the methods disclosed herein.

In one aspect, provided herein is a method of making any 3D object such as an eyewear product by three-dimensional printing, comprising the steps of:
a) dyeing a single-color filament adapted for printing with a 3D printer extruder with one or more dye compositions to form a multi-color filament;
b) passing the multi-color filament into the 3D printer extruder;
c) melting the multi-color filament in the 3D printer extruder to form a melt; and
d) discharging the melt from at least one nozzle of the 3D printer extruder to form the eyewear product,
wherein the single-color filament is made of a thermoplastic resin selected from a cellulose ester, a nylon or a polyester, and wherein each of the one or more dye compositions comprises a dye and water.

In some embodiments, the method further comprises extruding the thermoplastic resin into the single-color filament and wherein the single-color filament is white or has a natural color of the thermoplastic resin.

In certain embodiments, the thermoplastic resin is cellulose acetate, cellulose acetate propionate or a combination thereof. In some embodiments, the thermoplastic resin is Nylon 6 or 12. In other embodiments, the thermoplastic resin is PETG, PCTG or PET-CHDM. In other embodiments, the thermoplastic resin is cellulose acetate.

In some embodiments, the volume or weight ratio of the dye or the hydrophilic dye to water is from about 1:10 to about 1:20, the dyeing temperature is from about 50 °C to about 80 °C, and the dyeing time is from about 30 minutes to about 5 hours.

In another aspect, provided herein is an eyewear product prepared by the method disclosed herein, wherein the eyewear product has a plurality of colors, and wherein the plurality of colors comprise at least one smooth transition from one color to another color without a sudden switch or stepped change in color.

In certain embodiments, the eyewear product disclosed herein is an eyeglass frame comprises a frame front and/or a pair of temples. In other embodiments, the eyewear product disclosed herein is an eyeglass frame comprises a frame front integrally bonded to a pair of temples. In further embodiments, the eyewear product disclosed herein is a frame front, a pair of temples and/or a pair of endtips. In further embodiments, the eyewear product disclosed herein is a semi-finished eyewear product or one or more parts of an eyewear product such as endtips, nose pads, and temples. In still further embodiments, the eyewear product includes one or more eyewear sheets suitable for making the eyewear product, the semi-finished eyewear product and the one or more parts of an eyewear product.
In certain embodiments, the one or more dye compositions disclosed herein are one or more hydrophilic dye compositions, each of which independently comprises a hydrophilic dye and water. In other embodiments, the hydrophilic dye disclosed herein comprises a pigment, a polymeric surfactant and one or more polar solvents. In other embodiments, the polymeric surfactant is poly(ethylene glycol) and the one or more polar solvents comprise benzyl alcohol, acetone and ethylene glycol.
In some embodiments, the diameter of the single-color filament disclosed herein and the diameter of the multi-color filament disclosed herein are the same. In other embodiments, the diameter of the single-color filament or the diameter of the multi-color filament is about 1.75 mm, about 2.85 mm or about 3.00 mm.

### BRIEF DESCRIPTION OF THE DRAWINGS

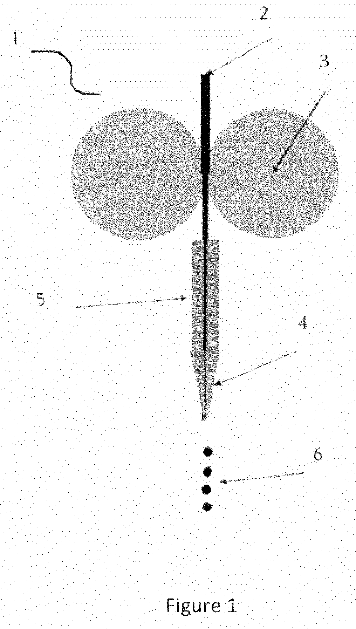

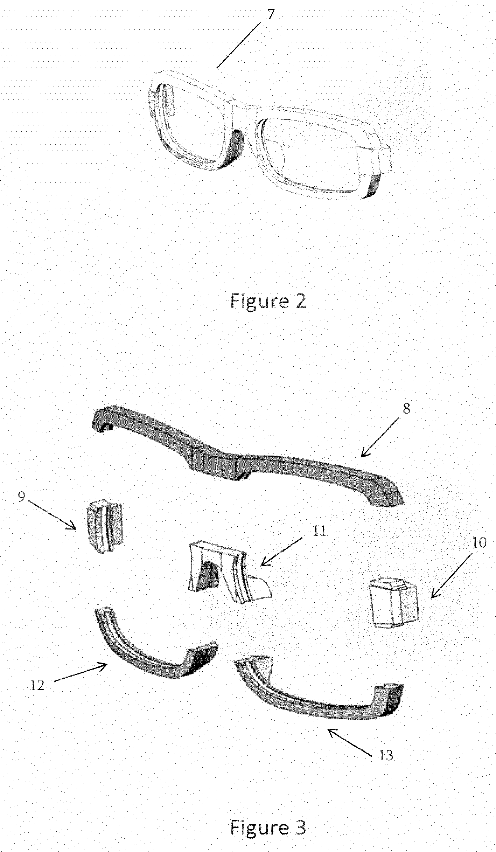

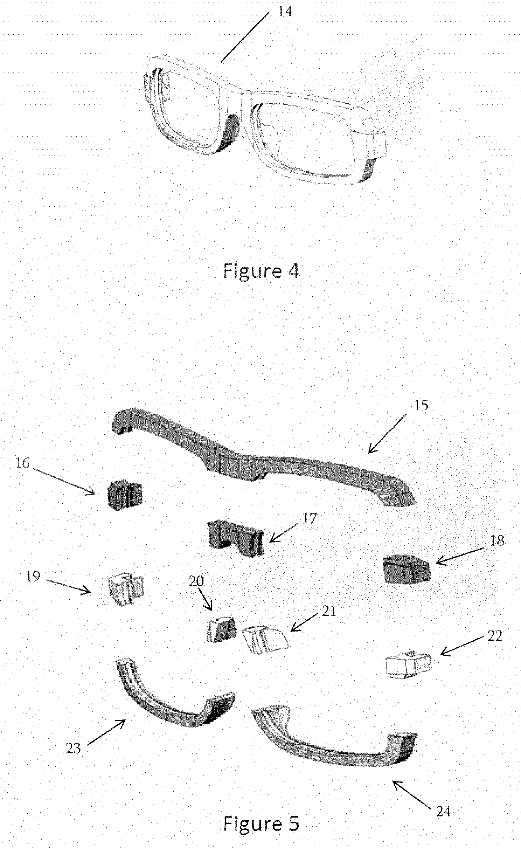

Figure 1 depicts an embodiment of steps (b)-(d) of the method disclosed herein.Figure 2 depicts a perspective view of an embodiment of a frame front prepared by the method disclosed herein.Figure 3 depicts an exploded view of the frame front of Figure 2.Figure 4 depicts a perspective view of another embodiment of a frame front prepared by the method disclosed herein.Figure 5 depicts an exploded view of the frame front of Figure 4.

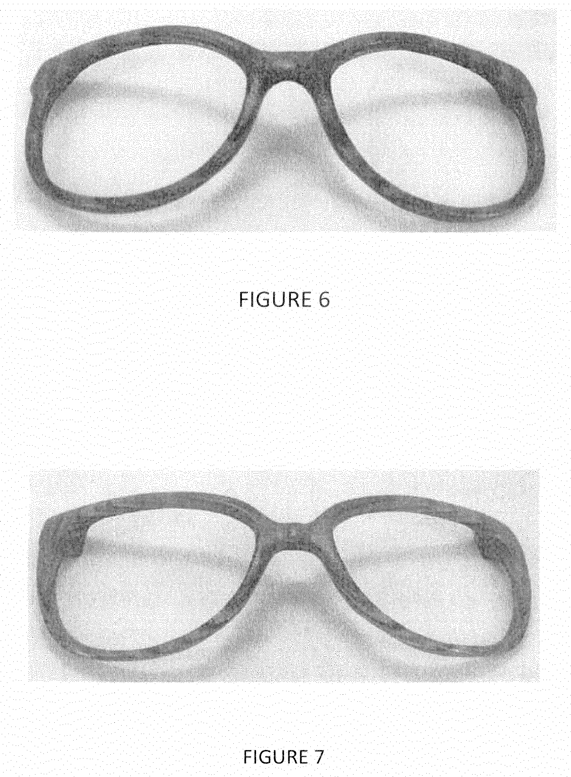

Figure 6 depicts an embodiment of a multi-color frame front having a gradual color change prepared by the method disclosed herein using a single print head.Figure 7 depicts another embodiment of a multi-color frame front having a gradual color change prepared by the method disclosed herein using a single print head.

### DETAILED DESCRIPTION OF THE INVENTION

Provided herein is a method of making an eyewear product by three-dimensional printing, comprising the steps of:a) dyeing a single-color filament adapted for printing with a 3D printer extruder with one or more dye compositions to form a multi-color filament;b) passing the multi-color filament into the 3D printer extruder;c) melting the multi-color filament in the 3D printer extruder to form a melt; and d) discharging the melt from a nozzle of the 3D printer extruder to form the eyewear product,wherein the single-color filament is made of a thermoplastic resin selected from a cellulose ester, a nylon or a polyester, and wherein each of the one or more dye compositions comprises a dye and water.

Any 3D printer extruder (aka 3D print head, 3D printer head or 3D extrusion head) that can process and melt a thermoplastic (such as cellulose acetate) filament and discharge the melt to form a 3D article can be used herein. In some embodiments, the 3D printer extruder comprises rollers, a liquefier with one or more heaters, and one or more nozzles, wherein the rollers pulls the filament from a spool, reel or coil, and pushes the filament towards the liquefier and the melt in the liquefier towards the nozzle. The 3D printer extruders are described in an article titled "3D Printer Extruder" downloadable from the website https://en.wikipedia.org/wiki/3D printer extruder.
The 3D printer extruder is generally the most important part of a 3D printer using the extrusion deposition method, which includes fused deposition modeling (FDM), fused filament fabrication (FFF), or plastic jet printing (PJP). The extrusion deposition method described herein refers to a method wherein a 3D article is produced by extruding a molten material to form layers as the material hardens immediately after extrusion from a nozzle of the 3D printer extruder. In some embodiments, a thermoplastic filament is fed into a 3D printer extruder which melts the thermoplastic filament. The melt is then deposited by a nozzle of the 3D printer extruder to form the 3D article. The nozzle can be moved by stepper or servo motors in both horizontal and vertical directions following a path controlled by a computer-aided manufacturing (CAM) software package. The 3D article is built from the bottom up, one layer at a time. The FDM, FFF, and PJP are described in an article titled "Fused Deposition Modeling" downloadable from the website https://en.wikipedia.org/wiki/Fused deposition modeling.

In certain embodiments, the thermoplastic resin used herein can be any thermoplastic commonly used for 3D printing such as acrylonitrile butadiene styrene (ABS), polycarbonate (PC), polylactic acid (PLA), polyethylene terephthalate (PET), high density polyethylene (HDPE), polyphenylsulfone (PPSU), poly(meth)acrylate, polyetherimide (PEI), polyether ether ketone (PEEK), high impact polystyrene (HIPS), thermoplastic polyurethane (TPU), polyamides (nylon) and combinations thereof. In some embodiments, the thermoplastic resin used herein is free of ABS, PC, PLA, PET, HDPE, PPSU, poly(meth)acrylate, PEI, PEEK, HIPS, TPU, nylon or a combination thereof. In other embodiments, the thermoplastic resin used herein is free of a polyamide or nylon. In further embodiments, the thermoplastic resin used herein is free of a polyester having repeating units having same ester group. In further embodiments, the thermoplastic resin used herein is free of a copolyester.

As used herein, the term "thermoplastic resin" refers to a polymer that becomes pliable or moldable above a specific temperature and solidifies upon cooling.

As used herein, the term "polymer" refers to a polymeric compound prepared by polymerizing monomers, whether of the same or a different type. The generic term "polymer" embraces the terms "homopolymer," "copolymer," "terpolymer" as well as "interpolymer."

As used herein, the term "nylon" refers to an aliphatic or semi-aromatic polyamide. In some embodiments, the nylon is a homopolymer nylon derived from one monomer. In further embodiments, the homopolymer nylon is nylon 6, nylon 11 or nylon 12 derived from caprolactam, 11-aminoundecanoic acid, or *ω*-aminolauric acid respectively. In certain embodiments, the nylon is a homopolymer nylon derived from a pair of diamine and diacid. Some non-limiting examples of the diacid include adipic acid, sebacic acid, dodecanedioic acid, terephthalic acid, and isophthalic acid. Some non-limiting examples of the diamine include putrescine, 1,5-pentanediamine, hexamethylene diamine, m-xylylene diamine, nonanediamine, decanediamine, dodecanediamine, bis(paraaminocyclohexyl)methane, and trimethyl hexamethylene diamine.

As used herein, the term "polyester" refers to a polymer having an ester functional group in each repeating unit on its main chain. In some embodiments, the polyester is polyethylene terephthalate (PET), polyethylene naphthalate (PEN), poly(cyclohexanedimethylene terephthalate) (PCT). In certain embodiments, the polyester is a copolyester such as PET-CHDM, PETG or PCTA.

As used herein, the term "PCTG" or PETG or PET-CHDM refers to a polymer derived from ethylene glycol, 1,4-cyclohexane dimethanol and dimethyl terephthalate or terephthalic acid (TPA). The generic structure of PCTG can be represented by formula (I) as shown below. 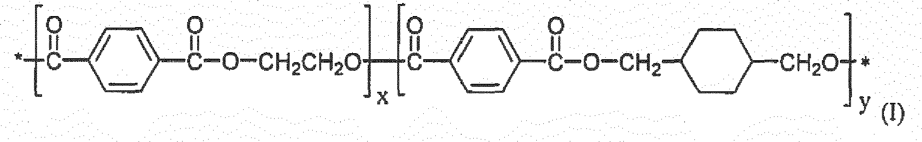 wherein the asterisks (*) are end groups (e.g., H, OH, SH, TPA, ester or amide end group); y is from 0.5 to 0.99; and x is from 0.5 to 0.01. PCTG is distinguished from PETG or PET-CHDM by the values of x and y. For example, y is from 0.05 to 0.5 and x is from 0.95 to 0.5 for PETG; and y is from 0.01 to 0.05 and x is from 0.99 to 0.95 for PET-CHDM.

In some embodiments, the thermoplastic resin used herein is or comprises a cellulose ester. In other embodiments, the thermoplastic resin is or comprises cellulose acetate, cellulose acetate propionate or a combination thereof. In further embodiments, the thermoplastic resin is or comprises cellulose acetate.

In some embodiments, the method further comprises extruding the thermoplastic resin into the single-color filament. Filament extrusion refers to a process for creating a filament suitable for 3D printing (3D filament) of a fixed cross-sectional profile by pushing or pulling a molten material through a die of the desired cross-section. Any filament extruder that can convert thermoplastic resin pellets into a 3D filament can be used herein. In certain embodiments, the filament extruder comprises a barrel containing a screw, a hopper and a die. Pellets can be fed continuously from the hopper into the barrel. The screw driven by an electric motor transports the pellets through the barrel towards the die. At the end of the barrel near the die, the thermoplastic pellets soften and melt because of the heat generated by the operation of the extruder. The melt is pushed through the die to form a continuous filament having a constant and fixed diameter. Optionally a heater placed at one end of the barrel near the die is used to assist the melting of the pellets. In some embodiments, the diameter of the single-color filament is about 1.75 mm, about 2.85 mm or about 3.00 mm.

The thermoplastic resin pellets can be mixed with a color masterbatch for providing the filament with a color, and/or with an additive masterbatch for providing the filament with desirable mechanical, chemical and/or physical properties. The color masterbatch or the additive masterbatch is a concentrated mixture of a color pigment or an additive in a carrier resin. In some embodiments, the single-color filament is white in color. In other embodiments, the single-color filament has a natural color of the thermoplastic resin. The thermoplastic resin pellets may be pre-dried to remove moisture. Any pre-drying condition that can remove moisture from a thermoplastic resin pellets may be used herein. In some embodiments, the pre-drying is carried out at 60°C to 70 °C for 4 to 8 hours before extrusion.

The single-color filament can be dyed by any dye that can dye a thermoplastic. In certain embodiments, the dye is a hydrophobic dye. In some embodiments, the dye is a hydrophilic dye. In other embodiments, the dye is not a hydrophobic dye. In further embodiments, the dye is not a hydrophilic dye. In still further embodiments, the dye is one or more hydrophilic dye compositions. Each of the one or more hydrophilic dye compositions independently comprises a hydrophilic dye and water. In some embodiments, the volume or weight ratio of the dye or the hydrophilic dye to water is from about 1:5 to about 1:40, from about 1:10 to about 1:30 or from about 1:10 to about 1:20.

Any hydrophilic dye that can dye a thermoplastic can be used to dye the single-color thermoplastic filament disclosed herein. In certain embodiments, the hydrophilic dye disclosed herein comprises a pigment, a surfactant, and one or more polar solvents. In some embodiments, the surfactant is or comprises a non-ionic surfactant or a polymeric surfactant. Some non-limiting examples of the non-ionic surfactant or polymeric surfactant include long chain alcohols (such as fatty alcohols, cetyl alcohol, stearyl alcohol, and oleyl alcohol); poly(ethylene glycol); polyoxyethylene polyoxyethylene glycol alkyl ethers (such as octaethylene glycol monododecyl ether and pentaethylene glycol monododecyl ether); polyoxypropylene glycol alkyl ethers; glucoside alkyl ethers (such as decyl glucoside, lauryl glucoside and octyl glucoside); polyoxyethylene glycol octylphenol ethers (such as TRITON® X-100); polyoxyethylene glycol alkylphenol ethers (such as nonoxynol-9); glycerol alkyl esters (such as glyceryl laurate); polyoxyethylene glycol sorbitan alkyl esters (such as polysorbate); sorbitan alkyl esters; cocamide MEA, cocamide DEA; dodecyldimethylamine oxide; block copolymers of polyethylene glycol and polypropylene glycol (such as poloxamers); polyethoxylated tallow amine (POEA) and combinations thereof. In some embodiments, the non-ionic surfactant or polymeric surfactant is poly(ethylene glycol).

The one or more polar solvents in the hydrophilic dye can be any polar solvent. The polar solvent can be any polar protic or polar aprotic solvent having a dielectric constant of greater than 15, greater than 20, greater than 25, greater than 30, greater than 35, greater than 40, or greater than 45. Some non-limiting examples of the polar protic solvent include alcohols (such as benzyl alcohol, ethylene glycol, n-butanol, isopropanol, n-propanol, ethanol, methanol); and carboxylic acids (such as formic acid and acetic acid). Some non-limiting examples of the polar aprotic solvent include tetrahydrofuran, ethyl acetate, acetone, dimethylformamide, acetonitrile, dimethyl sulfoxide, nitromethane, and propylene carbonate. In some embodiments, the one or more polar solvents comprise one or more polar protic solvents, one or more polar aprotic solvents or a combination thereof. In certain embodiments, the one or more polar solvents comprise benzyl alcohol, acetone and ethylene glycol,

The dyeing step can be carried out at any elevated temperature that is suitable for dyeing a thermoplastic filament. In certain embodiments, the dyeing temperature is from about 20 °C to about 80 °C, from about 30 °C to about 80 °C, from about 40 °C to about 80 °C, from about 50 °C to about 80 °C, from about 60 °C to about 80 °C, from about 50 °C to about 70 °C, or from about 50 °C to about 60 °C.

The dyeing step can be carried out for a time period that is sufficient for dyeing a thermoplastic filament. In general, the dyeing time decreases with increasing dyeing temperature. In some embodiments, the dyeing time is from about 30 minutes to about 5 hours, from about 1 hour to about 5 hours, from about 2 hours to about 5 hours, from about 3 hours to about 5 hours, from about 4 hours to about 5 hours, or from about 4 hours to about 6 hours.

After the dyeing step, the single-color filament is converted into a multi-color filament. The multi-color filament can be pre-dried before it is passed into the 3D printer extruder disclosed herein. Figure 1 shows an embodiment of steps (b)-(d) of the method disclosed herein, in which multicolor filament (2) is pulled into 3D printer extruder (1) by rollers (3) and pushed into liquefier (5) with heater and thermocouples. Liquefier (5) turns multicolor filament (2) into a melt. Multicolor filament (2) behind the melt pushes the melt through nozzle (4) into colored droplets (6). Colored droplets (6) are then deposited by nozzle (4) to form a 3D article. Nozzle (4) can be moved by stepper or servo motors in both horizontal directions (X and Y axes) and vertical direction (Z axis) following a path controlled by a computer-aided manufacturing (CAM) software.

In another aspect, provided herein is a multi-color filament prepared by dyeing a single-color filament with one or more dye compositions disclosed herein, wherein the single-color filament is adapted for printing with a 3D printer extruder. In some embodiments, the single-color filament is made of a thermoplastic resin selected from a cellulose ester, a nylon or a polyester. In other embodiments, the each of the one or more dye compositions comprises the dye disclosed herein and water.

In certain embodiments, the diameter of the single-color filament disclosed herein and the diameter of the multi-color filament disclosed herein are the same. In some embodiments, the diameter of the multi-color filament is about 1.75 mm, about 2.85 mm or about 3.00 mm.

Also provided herein is an eyewear product prepared by the method disclosed herein, wherein the eyewear product has a plurality of colors. In some embodiments, the plurality of colors comprise at least one smooth transition from one color to another color without a sudden switch or stepped change in color. In other embodiments, the plurality of colors has a continuous range of colors. In other embodiments, the plurality of colors has a gradual color contour.

In certain embodiments, the eyewear product disclosed herein is an eyeglass frame comprises a frame front and a pair of temples. In some embodiments, the eyewear product disclosed herein is an eyeglass frame comprises a frame front integrally bonded to a pair of temples. In other embodiments, the eyewear product disclosed herein is a frame front. In some embodiments, the eyewear product disclosed herein is a pair of temples. In further embodiments, the eyewear product disclosed herein is an endtip. In further embodiments, the eyewear product disclosed herein is a semi-finished eyewear product or one or more parts of an eyewear product such as endtips, nose pads, and temples. In still further embodiments, the eyewear product includes one or more eyewear sheets suitable for making the eyewear product, the semi-finished eyewear product and the one or more parts of an eyewear product.

Figure 2 depicts a perspective view of frame front (7) prepared by the method disclosed herein. In some embodiments, frame front (7) comprises a plurality of parts wherein each of the parts independently has a color selected from black, white, red, orange, yellow, green, blue, violet or any color in the visible spectrum. In certain embodiments, frame front (7) comprises six parts (parts 8-13) as shown in Figure 3, wherein part 8 is red, parts 9-11 are yellow and parts 12-13 are green in color.

Figure 4 depicts a perspective view of frame front (14) prepared by the method disclosed herein. In some embodiments, frame front (14) comprises a plurality of parts wherein each of the parts independently has a color selected from black, white, red, orange, yellow, green, blue, violet or any color in the visible spectrum. In certain embodiments, frame front (14) comprises ten parts (parts 15-24) as shown in Figure 5, wherein part 15 is red, parts 16-18 are blue, parts 19-22 are yellow, and parts 23-24 are green.

Figure 6 depicts an embodiment of a multi-color frame front prepared by the method disclosed herein using a single print head. The multi-color frame front of Figure 6 can also be prepared by 2 or more print heads using the multi-color filament disclosed herein. The multi-color frame front shows an unexpected effect of having a gradual color change; or a continuous range of colors; or a plurality of colors comprise at least one smooth transition from one color to another color without a sudden switch or stepped change in color.

Figure 7 depicts another embodiment of a multi-color frame front having a gradual color change prepared by the method disclosed herein using a single print head. The multi-color frame front of Figure 7 can also be prepared by 2 or more print heads using the multi-color filament disclosed herein. The multi-color frame front shows an unexpected effect of having a gradual color change; or a continuous range of colors; or a plurality of colors comprise at least one smooth transition from one color to another color without a sudden switch or stepped change in color.

In another aspect, provided herein is a 3D extrusion printer, comprising:
c) a 3D printer extruder comprising a nozzle; and
d) the multi-color filament disclosed herein, wherein the multi-color filament is supplied to the 3D printer extruder to form a melt to be discharged by the nozzle.

In some embodiments, the 3D extrusion printer is an FDM printer. In other embodiments, the 3D extrusion printer is an FFF printer. In certain embodiments, the 3D extrusion printer is a PJP printer. In other embodiments, the 3D extrusion printer comprises one nozzle, 2 or more nozzles, 3 or more nozzles, or 4 or more nozzles.

The thermoplastic filaments disclosed herein can have a melt flow index from about 0. 1 to about 100 g/10 minutes, from about 0.5 to about 50 g/10 minutes, from about 1 to about 40 g/10 minutes, from about 1 to about 30 g/10 minutes, from about 1 to about 20 g/10 minutes, from about 1 to about 10 g/10 minutes, from about 1.5 to about 10 g/10 minutes, or from about 2.0 to about 10 g/10 minutes. The melt index can be measured at a temperature of 190°C, 200°C or 210°C; and under a load of 2.16 kg or 5 Kg according to ASTM D-1238, which is incorporated herein by reference.

Optionally, the thermoplastic resin disclosed herein can comprise at least one additive for the purposes of improving and/or controlling the processibility, appearance, physical, chemical, and/or mechanical properties of the polymer compositions. In some embodiments, the thermoplastic resin does not comprise an additive. Any plastics additive known to a person of ordinary skill in the art may be used in the thermoplastic resin disclosed herein. Non-limiting examples of suitable additives include colorants or pigments, UV stabilizers, plasticizers, antioxidants, fillers, lubricants, antifogging agents, flow aids, coupling agents, crosslinking agents, nucleating agents, surfactants, slip agents, antiblocking agents, solvents, flame retardants, antistatic agents, and combinations thereof. The total amount of the additives can range from about greater than 0 to about 80 wt.%, from about 0.001 wt.% to about 70 wt.%, from about 0.01 wt.% to about 60 wt.%, from about 0.1 wt.% to about 50 wt.%, from about 1 wt.% to about 40 wt.%, or from about 10 wt.% to about 50 wt. % of the total weight of the thermoplastic resin. Some polymer additives have been described in Zweifel Hans et al., "Plastics Additives Handbook," Hanser Gardner Publications, Cincinnati, Ohio, 5th edition (2001).

In further embodiments, the thermoplastic resin disclosed herein optionally comprises a colorant or pigment that can change the look of the thermoplastic resin to human eyes. Any colorant or pigment known to a person of ordinary skill in the art may be added to the polymer compositions disclosed herein. Non-limiting examples of suitable colorants or pigments include inorganic pigments such as metal oxides such as iron oxide, zinc oxide, and titanium dioxide, mixed metal oxides, carbon black, organic pigments such as anthraquinones, anthanthrones, azo and monoazo compounds, arylamides, benzimidazolones, BONA lakes, diketopyrrolo-pyrroles, dioxazines, disazo compounds, diarylide compounds, flavanthrones, indanthrones, isoindolinones, isoindolines, metal complexes, monoazo salts, naphthols, b-naphthols, naphthol AS, naphthol lakes, perylenes, perinones, phthalocyanines, pyranthrones, quinacridones, and quinophthalones, and combinations thereof. Some colorants have been described in Zweifel Hans et al., "Plastics Additives Handbook," Hanser Gardner Publications, Cincinnati, Ohio, 5th edition, Chapter 15, pages 813-882 (2001), which is incorporated herein by reference. In some embodiments, the pigment is a white pigment to provide the thermoplastic resins or the filaments disclosed herein a white color. In other embodiments, the pigment has a color of red, orange, yellow, green, blue, violet or any color in the visible spectrum.

Optionally, the thermoplastic resin disclosed herein can comprise a filler which can be used to adjust, *inter alia,* volume, weight, costs, and/or technical performance. Any filler known to a person of ordinary skill in the art may be added to the thermoplastic resin disclosed herein. Non-limiting examples of suitable fillers include talc, calcium carbonate, chalk, calcium sulfate, clay, kaolin, silica, glass, fumed silica, mica, wollastonite, feldspar, aluminum silicate, calcium silicate, alumina, hydrated alumina such as alumina trihydrate, glass microsphere, ceramic microsphere, thermoplastic microsphere, barite, wood flour, glass fibers, carbon fibers, marble dust, cement dust, magnesium oxide, magnesium hydroxide, antimony oxide, zinc oxide, barium sulfate, titanium dioxide, titanates and combinations thereof. In some embodiments, the filler is barium sulfate, talc, calcium carbonate, silica, glass, glass fiber, alumina, titanium dioxide, or a mixture thereof. In other embodiments, the filler is talc, calcium carbonate, barium sulfate, glass fiber or a mixture thereof. Some fillers have been disclosed in U.S. Patent No. 6,103,803 and Zweifel Hans et al., "Plastics Additives Handbook," Hanser Gardner Publications, Cincinnati, Ohio, 5th edition, Chapter 17, pages 901-948 (2001).

In other embodiments, the thermoplastic resin disclosed herein optionally comprises an UV stabilizer that may prevent or reduce the degradation of the polymer compositions by UV radiations. Any UV stabilizer known to a person of ordinary skill in the art may be added to the thermoplastic resin disclosed herein. Non-limiting examples of suitable UV stabilizers include benzophenones, benzotriazoles, aryl esters, oxanilides, acrylic esters, formamidines, carbon black, hindered amines, nickel quenchers, hindered amines, phenolic antioxidants, metallic salts, zinc compounds and combinations thereof. Some UV stabilizers have been described in Zweifel Hans et al., "Plastics Additives Handbook," Hanser Gardner Publications, Cincinnati, Ohio, 5th edition, Chapter 2, pages 141-426 (2001).

Optionally, the thermoplastic resin disclosed herein can comprise a plasticizer. In general, a plasticizer is a chemical that can increase the flexibility and lower the glass transition temperature of polymers. Any plasticizer known to a person of ordinary skill in the art may be added to the thermoplastic resin disclosed herein.

In some embodiments, the thermoplastic resin disclosed herein optionally comprises an antioxidant that can prevent the oxidation of thermoplastic resin and organic additives in the thermoplastic resin. Any antioxidant known to a person of ordinary skill in the art may be added to the thermoplastic resin disclosed herein. Non-limiting examples of suitable antioxidants include aromatic or hindered amines such as alkyl diphenylamines, phenyl-α-naphthylamine, alkyl or aralkyl substituted phenyl-α-naphthylamine, alkylated p-phenylene diamines, tetramethyl-diaminodiphenylamine and the like; phenols such as 2,6-dit-butyl-4-methylphenol; 1,3,5-trimethyl-2,4,6-tris(3',5'-dit-butyl-4'-hydroxybenzyl)benzene; tetrakis[(methylene(3,5-di-t-butyl-4-hydroxyhydrocinnamate)]methane (e.g., IRGANOX™ 1010, from Ciba Geigy, New York); acryloyl modified phenols; octadecyl-3,5-di-t-butyl-4-hydroxycinnamate (e.g., IRGANOX™ 1076, commercially available from Ciba Geigy); phosphites and phosphonites; hydroxylamines; benzofuranone derivatives; and combinations thereof. Some antioxidants have been described in Zweifel Hans et al., "Plastics Additives Handbook," Hanser Gardner Publications, Cincinnati, Ohio, 5th edition, Chapter 1, pages 1-140 (2001)

Optionally, the thermoplastic resin disclosed herein can comprise a lubricant. In general, the lubricant can be used, *inter alia,* to modify the rheology or melt flow index of the molten thermoplastic resin, to improve the surface finish of molded articles, and/or to facilitate the dispersion of fillers or pigments. Any lubricant known to a person of ordinary skill in the art may be added to the thermoplastic resin disclosed herein. Non-limiting examples of suitable lubricants include fatty alcohols and their dicarboxylic acid esters, fatty acid esters of short-chain alcohols, fatty acids, fatty acid amides, metal soaps, oligomeric fatty acid esters, fatty acid esters of long-chain alcohols, montan waxes, polyethylene waxes, polypropylene waxes, natural and synthetic paraffin waxes, fluoropolymers and combinations thereof. Some suitable lubricants have been disclosed in Zweifel Hans et al., "Plastics Additives Handbook," Hanser Gardner Publications, Cincinnati, Ohio, 5th edition, Chapter 5, pages 511-552 (2001).

The following examples are presented to exemplify embodiments of the invention. All numerical values are approximate. When numerical ranges are given, it should be understood that embodiments outside the stated ranges may still fall within the scope of the invention. Specific details described in each example should not be construed as necessary features of the invention.

### EXAMPLES

### Example 1 - Dyeing a single-color filament made of cellulose acetate

A cellulose acetate filament was dyed with a hydrophilic dye composition comprising a mixture of water and a hydrophilic dye having a formulation as shown in Table 1 below. Four hydrophilic dyes were obtained from China Dongguan Dicai Dye Company at Dongguan, Guangdong, China.

**Table 1. Hydrophilic Dye Formulation**

| Ingredient | CAS Number | Amount (in part by weight) |
|---|---|---|
| Benzyl Alcohol | 100-51-6 | 55 |
| Polyethylene glycol) | 25322-68-3 | 25 |
| Acetone | 67-64-1 | 20 |
| Ethylene Glycol | 107-21-1 | 20 |
| Pigment | | 10 |

The pigments used for the 4 hydrophilic were a conventional red, blue, green and yellow pigment respectively.

The hydrophilic dye was mixed with pure water in a ratio varying from 3:100 to 1:5 to form the hydrophilic dye composition. The hydrophilic dye composition was kept at a temperature from 20 °C to 60 °C and then the cellulose acetate filament was dipped into the hydrophilic dye composition for 10 minutes to 5 hours. The dyeing conditions and results are shown in Table 2 below.

**Table 2.**

| Condition | A | B | C | D | E | F | H | I |
|---|---|---|---|---|---|---|---|---|
| Ratio (Dye: Water) | 3:100 | 3:100 | 3:100 | 1:20 | 1:10 | 1:10 | 1:10 | 1:05 |
| Temperarture (°C) | 20-25 | 40-50 | 40-50 | 50-60 | 40-50 | 20-25 | 25 | 20-25 |
| Time | 5 hrs | 5 hrs | 5 hrs | 5 hrs | 5 hrs | 2 hrs | 10 mins | 10 mins |
| Result | too light | too light | light | OK | too dark | dark | Light | too dark |

### Example 2 - Dyeing a single-color filament made of nylon

A nylon filament (PA 1.75 obtained from Luoqi 3D Printing Material Co., China) was dyed with a RIT dye (RIT dye Tinte, Fucsia) obtained from Phoenix Brands LLC at Stamford, CT.

The RIT dye was mixed with pure water in ratios varying from 1:50 to 1:5 to form a RIT dye composition. The RIT dye composition was kept at a temperature from 20°C to 80 °C and then the nylon filament was dipped into the RIT dye composition for 30 minutes to 6 hours. The dyeing conditions and results are shown in Table 3 below.

**Table 3.**

| Condition | A | B | C | D | E | F | G | I |
|---|---|---|---|---|---|---|---|---|
| Ratio (Dye: Water) | 1:50 | 1:30 | 1:20 | 1:10 | 1:10 | 1:10 | 1:05 | 1:05 |
| Temperature (°C) | 80 | 80 | 80 | 80 | 40°C | 20-25 | 25 | 20-25 |
| Time | 30 mins | 30 mins | 30 mins | 30 mins | 30 mins | 3 hrs | 3-4 hours | 6 hrs |
| Result | too light | too light | light | OK | light | light | OK | too dark |

### Example 3 - 3D Printing with Example 1

The colored filament made of cellulose acetate obtained by condition D of Example 1 was used for printing with a FDM printer (Makerbot Replicator 2X from MakerBot® Industries, LLC, Brooklyn, NY) to form an eyewear object. To promote the adhesion between the object and the platform of the FDM printer, a glue (UHU, Germany) or a sticker (3M scotch blue, USA) was applied on the platform. The printing conditions and results are shown in Table 4 below.

**Table 4.**

| Condition | | A | B | C | D | E | F | G |
|---|---|---|---|---|---|---|---|---|
| printing temp. | base layer | 220 | 230 | 230 | 250 | 250 | 250 | 260 |
| | other layers | 220 | 230 | 230 | 250 | 230 | 230 | 240 |
| platform temp. | | 60 | 80 | 80 | 100 | 100 | 100 | 101 |
| glue/sticker on platform | | N/A | Sticker | Glue | Glue | Glue | Glue | Glue |
| Speed | | 80% | 70% | 70% | 70% | 70% | 70% | 70% |
| infill | | 80% | 80% | 80% | 100% | 100% | 100% | 100% |
| Result | | base layer delamination from beginning | delamination from the first several layers, the surface deformed | delamination from the first several layers, the surface deformed | the upper layer CA do not have time to cooling down | the object could be printed, but adhesion between layer are weak | the object could be printed, and layers adhesion is improved. | Temp is too high, material become yellowrish |

### Example 4 - 3D Printing with Example 2

The colored filament made of nylon obtained by condition D of Example 2 was used for printing with a FDM printer (Makerbot Replicator 2X) to form an eyewear object. To promote the adhesion between the object and the platform of the FDM printer, a KAPTON™ (polyimide) tape (Polyimide Tape) or a sticker (3M scotch blue, USA) was applied on the platform. The printing conditions and results are shown in Table 5 below.

**Table 5.**

| Condition | | A | B | C | D | E | F |
|---|---|---|---|---|---|---|---|
| printing temp. | base layer | 220 | 230 | 250 | 250 | 260 | 260 |
| | other layers | 220 | 230 | 250 | 250 | 260 | 260 |
| platform temp. | | 60 | 80 | 100 | 100 | 100 | 110 |
| glue/sticker on platform | | N/A | Sticker | Sticker | Polyimide tape | | |
| Speed | | 80% | 70% | 70% | 70% | 50% | 45% |
| infill | | 80% | 80% | 80% | 80% | 100% | 100% |
| Result | | base layer delamination from beginning | delamination from the first several layers, | the object shrinkage from the base layer | delamination from the first several layers, the surface deformed | the object could be printed. | the object could be printed, and the surface become smooth |

### Example 5 - Preparation of Cellulose Filament by Extrusion

Predry Step: Dehumidify drying was applied on cellulose pellets (TENITE™ 0001KK00, obtained from Eastman Mazzucchelli Plastics (Shenzhen) Company Limited, Shenzhen, China) for 4 to 8 hours at 40 to 80 °C.

Extrusion Step: An extrusion machine (Wellzone-C from Shenzhen Mistar Technology Co., Ltd., Shenzhen, China) was used for the extrusion. The extrusion conditions and results are shown in Table 6 below.

**Table 6.**

| Condition | A | B | C | D | E | F |
|---|---|---|---|---|---|---|
| Heating | 200 °C | 220 °C | 220 °C | 230 °C | 240 °C | 250 °C |
| Speed (from 3 to 15) | 7 | 7 | 10 | 14 | 14 | 14 |
| Cooling | yes | no | yes | yes | yes | yes |
| Result | not stable | wire was too thicker | 1.75 mm diameter wire OK | Stable | could not be cooled down | yellowish wire |

### Example 6 - Dyeing of Example 5

### A) Programming and simulation:

3D files were designed by SolidWorks software (2014 version obtained from Dassault Systèmes SolidWorks Corp., Waltham, MA). SolidWorks is a solid modeling computer-aided design (CAD) and computer-aided engineering (CAE) software program. The color and shape of each part was designed. Based on the 3D design, SolidWorks sliced the object into different layers with certain colors. A printing simulation was done by Repetier, a 3D printing program (obtained from Hot-World GmbH & Co. KG in Willich, Germany), based on the design of the layers, the printing position and the supporting element. Then each segment of the filament to be dyed with a certain color and the length of the segment were pre-determined. Then the filament was dyed segment by segment with the pre-determined color for the pre-determined length.

### B) Dyeing and Printing

The cellulose filament having 1.75 mm diameter having a density of 1.3 g/cm³ prepared by Condition C of Example 5 was used here. SolidWorks software sliced the frame front of Figures 2 and 3 into six pieces to be dyed with certain colors, where part 8 of Figure 3 was red, parts 9-11 were yellow and parts 12-13 were green in color. SolidWorks calculated the weight and position of each piece, which in turn were used to calculate the length of each color segment of the cellulose filament. Based on the calculation, each segment of the 3D filament was dyed accordingly to the designed color.

**Calculation:** For a 1.75 mm of the cellulose filament having a density of 1.3 g/cm³, the weight of 1 m of cellulose filament was calculated to be 3.1258 g. Based on the calculation, each segment of the 3D filament was dyed accordingly to the designed color. The color, weight and length of each segment of the cellulose filament were calculated by SolidWorks and are shown in Table 7 below.

**Table 7.**

| Segment | Color | Weight (g) | Length (m) |
|---|---|---|---|
| A | Green | 3.124 | 1.00 |
| B | Yellow | 3.925 | 1.26 |
| C | Red | 4.125 | 1.32 |

**Dyeing:** The total length of the cellulose filament was calculated to be 3.58 m for printing the frame front of Figures 2 and 3. The first 1 m *(i.e.,* segment A) of the cellulose filament was dyed into green; the next 1.26 m *(i.e.,* segment B) of the cellulose filament was dyed into yellow color.; and then the remaining 1.32 m *(i.e.,* segment C) of the cellulose filament was dyed into red color. The dyed cellulose filament was dried for 5 hours at room temperature.

**Printing:** The frame front of Figures 2 and 3 was obtained by a 3D printer (Makerbot Replicator 2X from MakerBot® Industries, LLC, Brooklyn, NY) by printing with the dyed cellulose filament prepared above, where segment A was used to print parts 12-13; segment B was used to print parts 9-11; and segment C was used to print part 8. The print head temperature was 250 °C and the base temperature was 100 °C. The speed was 70% and the in-fill was 100%.

### Example 7 -Dyeing a single-color filament made of nylon

**Calculation:** For a 1.75 mm nylon filament (PA 1.75 obtained from Luoqi 3D Printing Material Co., China) having a density of 1.15 g/cm³, the weight of 1 m filament was calculated to be 2.765 g. SolidWorks software sliced the frame front of Figures 4 and 5 into 10 pieces to be dyed with certain colors, where part 15 of Figure 5 was red, parts 16-18 were blue, parts 19-22 were yellow, and parts 23-24 were green in color. SolidWorks calculated the weight and position of each piece, which in turn were used to calculate the length of each color segment of the nylon filament. Based on the calculation, each segment of the 3D filament was dyed accordingly to the designed color. The color, weight and length of each segment of the nylon filament were calculated by SolidWorks and are shown in Table 8 below.

**Table 8.**

| Section | Color | Weight(g) | Length(m) |
|---|---|---|---|
| A | Green | 2.763 | 1.00 |
| B | yellow | 1.579 | 0.57 |
| C | Blue | 1.826 | 0.66 |
| D | Red | 3.649 | 1.32 |

**Dyeing:** The total length of the nylon filament was calculated to be 3.55 m for printing the frame front of Figures 4 and 5. The first 1 m *(i.e.,* segment A) of the nylon filament was dyed into green; the next 0.57 m *(i.e.,* segment B) of the nylon filament was dyed into yellow color; the next 0.66 m (*i.e*., segment C) of the nylon filament was dyed into blue color; and then the remaining 1.32 m *(i.e.,* segment D) of the nylon filament was dyed into red color. The dyed nylon filament was dried for 5 hours at room temperature.

**Printing:** The frame front of Figures 4 and 5 was obtained by a 3D printer (Makerbot Replicator 2X from MakerBot® Industries, LLC, Brooklyn, NY) by printing with the dyed nylon filament prepared above, where segment A was used to print parts 23-24; segment B was used to print parts 19-22; segment C was used to print parts 16-18; and segment D was used to print part 15. The print head temperature was 260 °C and the base temperature was 100 °C. The speed was 50% and the in-fill was 100%.

## Claims

1. A method of making an eyewear product by three-dimensional printing, comprising the steps of:
a) dyeing a single-color filament adapted for printing with a 3D printer extruder (1) with one or more dye compositions to form a multi-color filament;
b) passing the multi-color filament (2) into the 3D printer extruder (1);
c) melting the multi-color filament in the 3D printer extruder (1) to form a melt; and
d) discharging the melt from at least one nozzle (4) of the 3D printer extruder (1) to form the eyewear product,
wherein the single-color filament is made of a thermoplastic resin selected from a cellulose ester, a nylon or a polyester, and wherein each of the one or more dye compositions comprises a dye and water.

2. The method of claim 1, wherein the one or more dye compositions are one or more hydrophilic dye compositions, each of which independently comprises a hydrophilic dye and water.

3. The method of any one of claim 1 or 2, wherein the thermoplastic resin is cellulose acetate, cellulose acetate propionate, nylon 6, nylon 12, PETG, PCTG, PET-CHDM or a combination thereof.

4. The method of claim 2, wherein the volume or weight ratio of the hydrophilic dye to water is from about 1:10 to about 1:20, the dyeing temperature is from about 50 °C to about 80 °C, and the dyeing time is from about 30 minutes to about 5 hours.

5. The method of claim 2, wherein the hydrophilic dye comprises a pigment, a polymeric surfactant, and one or more polar solvents.

6. The method of claim 5, wherein the polymeric surfactant is poly(ethylene glycol) and the one or more polar solvents comprise benzyl alcohol, acetone and ethylene glycol.

7. The method of any one of claims 1-6, wherein the eyewear product is an eyeglass frame comprises a frame front and/or a pair of temples; or the eyewear product is a semi-finished eyewear product or one or more parts of an eyewear product; or the eyewear product includes one or more eyewear sheets suitable for making the eyewear product, the semi-finished eyewear product and the one or more parts of an eyewear product.

8. The method of any one of claims 1-6, wherein the eyewear product is an eyeglass frame comprises a frame front integrally bonded to a pair of temples.

9. An eyewear product prepared by the method of any one of claims 1-6, wherein the eyewear product has a plurality of colors, and wherein the plurality of colors comprise at least one smooth transition from one color to another color without a sudden switch or stepped change in color.

10. The eyewear product of claim 9, wherein the eyewear product is a frame front (7, 14), a pair of temples and/or a pair of endtips; or the eyewear product is a semi-finished eyewear product or one or more parts of an eyewear product; or the eyewear product includes one or more eyewear sheets suitable for making the eyewear product, the semi-finished eyewear product and the one or more parts of an eyewear product.

11. The eyewear product of claim 9, wherein the eyewear product is an eyeglass frame comprising a frame front (7;14) integrally bonded to a pair of temples.

## Patentansprüche

1. Verfahren zur Herstellung eines Brillenproduktes durch dreidimensionales Drucken, das die folgenden Schritte umfasst:
a) Färben eines einfarbigen Filaments, das zum Drucken mit einem 3D-Drucker Extruder (1) mit einer oder mehreren Farbstoffzusammensetzungen geeignet ist, um ein mehrfarbiges Filament zu bilden;
b) Einführen des mehrfarbigen Filaments (2) in den 3D-Drucker Extruder (1);
c) Schmelzen des mehrfarbigen Filaments in dem 3D-Drucker Extruder (1), um
eine Schmelze zu bilden; und
d) Austragen der Schmelze aus mindestens einer Düse (4) des 3D-Drucker Extruders (1) zur Bildung des Brillenproduktes,
wobei das einfarbige Filament aus einem thermoplastischen Harz hergestellt ist, ausgewählt aus einem Celluloseester, einem Nylon oder einem Polyester, und wobei jede der einen oder mehreren Farbstoffzusammensetzungen einen Farbstoff und Wasser umfasst.

2. Verfahren nach Anspruch 1, wobei die eine oder die mehreren Farbstoffzusammensetzungen eine oder mehrere hydrophile Farbstoffzusammensetzungen sind, von denen jede unabhängig voneinander einen hydrophilen Farbstoff und Wasser umfasst.

3. Verfahren nach einem der Ansprüche 1 oder 2, wobei das thermoplastische Harz Celluloseacetat, Celluloseacetatpropionat, Nylon 6, Nylon 12, PETG, PCTG, PET-CHDM oder eine Kombination davon ist.

4. Verfahren nach Anspruch 2, wobei das Volumen oder Gewichtsverhältnis des hydrophilen Farbstoffs zu Wasser von etwa 1:10 bis etwa 1:20 beträgt, die Färbetemperatur von etwa 50 °C bis etwa 80 °C beträgt und die Färbezeit von etwa 30 Minuten bis etwa 5 Stunden beträgt.

5. Verfahren nach Anspruch 2, wobei der hydrophile Farbstoff ein Pigment, ein polymeres Tensid und ein oder mehrere polare Lösemittel umfasst.

6. Verfahren nach Anspruch 5, wobei das polymere Tensid Polyethylenglykol ist
und das eine oder die mehreren polaren Lösungsmittel Benzylalkohol, Aceton und Ethylenglykol umfassen.

7. Verfahren nach einem der Ansprüche 1-6, wobei das Brillenprodukt ein Brillengestell ist, das eine Rahmenfront und/oder ein Paar Bügel umfasst; oder das Brillenprodukt ein halbfertiges Brillenprodukt ist oder ein oder mehrere Teile eines Brillenprodukts; oder das Brillenprodukt eine oder mehrere Brillenbögen umfasst, die zur Herstellung des Brillenprodukts, des halbfertigen Brillenprodukts und des einen oder der mehreren Teile eines Brillenprodukts geeignet sind.

8. Verfahren nach einem der Ansprüche 1-6, wobei das Brillenprodukt ein Brillengestell ist, das eine Rahmenfront umfasst, die integral mit einem Paar Bügeln verbunden ist.

9. Brillenprodukt, hergestellt durch das Verfahren nach einem der Ansprüche 1-6, wobei das Brillenprodukt eine Vielzahl von Farben aufweist und wobei die Vielzahl von Farben mindestens einen fließenden Übergang von einer Farbe zu einer anderen Farbe umfasst ohne einen plötzlichen Wechsel oder einen schrittweisen Übergang der Farbe.

10. Brillenprodukt nach Anspruch 9, wobei das Brillenprodukt eine Rahmenfront (7, 14), ein Paar Bügel und/oder ein Paar Endspitzen ist; oder das Brillenprodukt ein halbfertiges Brillenprodukt ist oder ein oder mehrere Teile eines Brillenprodukts; oder das Brillenprodukt eine oder mehrere Brillenbögen umfasst, die zur Herstellung des Brillenprodukts, des halbfertigen Brillenprodukts und des einen oder der mehreren Teile eines Brillenprodukts geeignet sind.

11. Brillenprodukt nach Anspruch 9, wobei das Brillenprodukt ein Brillengestell ist, das eine Rahmenfront (7; 14) umfasst, die integral mit einem Paar Bügeln verbunden ist.

## Revendications

1. Procédé de préparation d'un produit de lunetterie produit par impression en trois dimensions, comprenant les étapes consistant à :
a) colorer un filament monochrome adapté pour une impression avec un dispositif d'extrusion pour imprimante 3D (1) avec une ou plusieurs compositions de colorant afin de former un filament polychrome ;
b) faire passer le filament polychrome (2) dans le dispositif d'extrusion pour imprimante 3D (1) ;
c) faire fondre le filament polychrome dans le dispositif d'extrusion pour imprimante 3D (1) pour former un produit fondu ; et
d) décharger le produit fondu à partir d'au moins une buse (4) du dispositif d'extrusion pour imprimante 3D (1) afin de former un produit de lunetterie,
dans lequel le filament monochrome est en résine thermoplastique sélectionnée parmi un ester de cellulose, un nylon ou un polyester, et dans lequel chacune de la ou des compositions de colorant comprend un colorant et de l'eau.

2. Procédé selon la revendication 1, dans lequel la ou les compositions de colorant sont une ou plusieurs compositions de colorant hydrophile, chacune comprenant indépendamment un colorant hydrophile et de l'eau.

3. Procédé selon la revendication 1 ou 2, dans lequel la résine thermoplastique est l'acétate de cellulose, le propionate d'acétate de cellulose, le nylon 6, le nylon 12, le PETG, le PCTG, le PET-CHDM ou une combinaison de ceux-ci.

4. Procédé selon la revendication 2, dans lequel le rapport en volume ou en poids du colorant hydrophile à l'eau est d'environ 1:10 à environ 1:20, la température de coloration est d'environ 50 °C à environ 80 °C, et le temps de séchage est d'environ 30 minutes à environ 5 heures.

5. Procédé selon la revendication 2, dans lequel le colorant hydrophile comprend un pigment, un tensioactif polymère et un ou plusieurs solvants polaires.

6. Procédé selon la revendication 5, dans lequel le tensioactif polymère est un poly(éthylène glycol) et le ou les solvants polaires comprennent l'alcool benzylique, l'acétone et l'éthylène glycol.

7. Procédé selon l'une quelconque des revendications 1 à 6, dans lequel le produit de lunetterie est une monture de lunettes qui comprend une partie frontale de la monture et/ou une paire de branches ; ou le produit de lunetterie est un produit de lunetterie semi-fini ou une ou plusieurs parties d'un produit de lunetterie ; ou le produit de lunetterie comprend une ou plusieurs feuilles de lunetterie appropriées pour la préparation du produit de lunetterie, du produit de lunetterie semi-fini et de la ou des parties d'un produit de lunetterie.

8. Procédé selon l'une quelconque des revendications 1 à 6, dans lequel le produit de lunetterie est une monture de lunettes qui comprend une partie frontale de la monture intégralement liée à une paire de branches.

9. Produit de lunetterie préparé par le procédé selon l'une quelconque des revendications 1 à 6, dans lequel le produit de lunetterie a une pluralité de couleurs, et dans lequel la pluralité de couleurs comprend au moins une transition harmonieuse d'une couleur à une autre couleur sans changement soudain ou changement progressif de couleur.

10. Produit de lunetterie selon la revendication 9, dans lequel le produit de lunetterie est une partie frontale de la monture (7, 14), une paire de branches et/ou une paire d'embouts ; ou le produit de lunetterie est un produit de lunetterie semi-fini ou une ou plusieurs parties d'un produit de lunetterie ; ou le produit de lunetterie comprend une ou plusieurs feuilles de lunetterie appropriées pour la préparation du produit de lunetterie, du produit de lunetterie semi-fini et de la ou des parties d'un produit de lunetterie.

11. Produit de lunetterie selon la revendication 9, dans lequel le produit de lunetterie est une partie frontale de la monture (7, 14) intégralement liée à une paire de branches.
